# EUROPEAN PATENT SPECIFICATION

(11) **EP 0 332 091 B1**
(45) Date of publication and mention of the grant of the patent: **22.05.1996**
(21) Application number: 89103820.0
(22) Date of filing: 04.03.1989
(51) Int. Cl.: H04N 3/233

(54) **Raster distortion corrected deflection circuit**
Ablenkungsschaltung mit Rasterverzerrungskorrektur
Circuit de déflexion à distorsion de trame corrigée

(30) Priority: 10.03.1988 GB 8805758
(43) Date of publication of application: 13.09.1989
(73) Proprietor: RCA LICENSING CORPORATION, Princeton New Jersey 08540 (US)
(72) Inventor: Haferl, Peter Eduard, CH-8134 Adliswil (CH)
(74) Representative: Einsel, Robert, Dipl.-Ing.

(56) References cited:
- EP-A- 0 236 064
- US-A- 3 737 572
- US-A- 4 206 388
- US-A- 4 719 392

## Description

This invention relates to deflection apparatuses in which the amplitude of a deflection current may be varied or modulated over a relatively wide range for correcting a raster distortion. Modulation of the deflection current amplitude may be desirable for purposes such as, for example, correction of outside and of inside east-west pincushion distortion.

Typically, a horizontal deflection apparatus includes an output stage having a deflection switch, a horizontal deflection winding and a trace capacitance that supplies deflection current to the deflection winding during each trace interval. A first retrace capacitance is coupled across the deflection winding during the retrace interval to form a retrace resonant circuit. Energy is replenished during retrace via a flyback transformer.

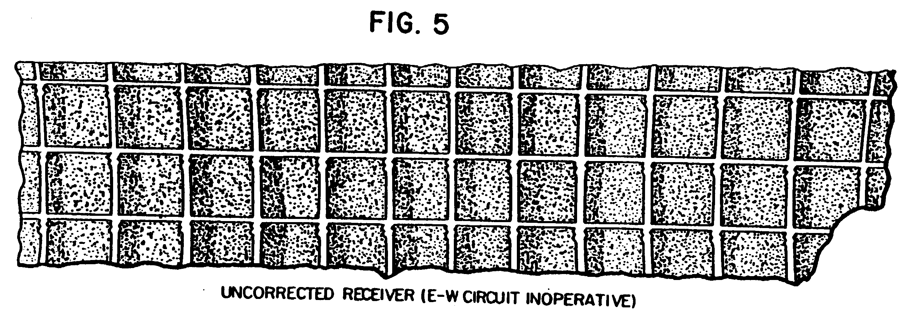

A high beam current provided from a secondary winding of the flyback transformer, during display, for example, of each white horizontal strip of a crosshatch pattern, such as shown in FIGURE 5, represents a heavy load to the flyback transformer during retrace.

In some prior art circuits, the retrace resonant circuit is coupled via a relatively small output impedance, of an east-west control circuit, to the primary winding of the flyback transformer throughout retrace. In such prior art circuits, the retrace capacitance may be slightly discharged during retrace due to the aforementioned loading. This may result in a discharge current from the trace capacitance into the retrace capacitance through the deflection winding and a resulting slight drop of the voltage across the trace capacitance due to the white horizontal strips of the crosshatch pattern.

The charge of the trace capacitance is replenished during the retrace intervals associated with the scan lines that display the black picture portion underneath the white crosshatch stripes. This causes a small current in the opposite direction, at a low frequency, to flow through the deflection winding during the trace intervals. The charge and discharge current of the trace capacitance produces a small raster displacement and results in low frequency oscillations modulating the deflection winding trace current. This low frequency modulation may cause each vertical strip of the crosshatch pattern to have of a zig-zag shape, instead of a straight line shape. The zig-zag shape appears in a given vertical direction immediately below the intersection point with a horizontal strip. Such distortions occurring at such low frequency, sometimes referred to as "mouseteeth" distortions, are illustrated in the crosshatch pattern of FIGURE 5.

Thus, mouseteeth distortions appear, during and just after the times in which high beam current transients occur, because the deflection circuit, that represents a low impedance energy flywheel during retrace, supplies the transient increase in energy requirement of the ultor circuit. Thus, energy transferred from the deflection circuit to the ultor circuit may tend to cause variations in the deflection winding trace current. The nature of mouseteeth distortion and corresponding solutions are explained in U.S. Patents 4,429,257; 4,634,937; 4,780,648 and 4,794,307.

Television deflection apparatuses according to the preambles of claims 1 and 9 are known from U.S. Patent 4,206,388 which relates to an east/west modulating circuit in which the modulating switch becomes conductive during or at the end of retrace and becomes nonconductive during trace. Due to the modulator switching during trace, it may cause perturbation of the horizontal trace.

In a horizontal deflection apparatus, embodying an aspect of the invention, a modulation switching current is formed by a bidirectional modulation switch during retrace. The modulation switch, coupled to the retrace resonant circuit that includes the first retrace capacitance, has a conduction time that is phase modulated during horizontal retrace in accordance with a vertical rate parabolic voltage. A second retrace capacitor is coupled in parallel with the modulation switch. The modulation switch is conductive during the trace interval and is turned-off at a controllable instant during retrace. The modulation switch forms, when conductive, a low impedance across the second retrace capacitor that clamps the voltage across the second retrace capacitor to zero. As a result, a controllable retrace pulse voltage having an amplitude that is controllable and a width that is variable is developed across the second retrace capacitor when the modulation switch during a portion of retrace is nonconductive. The retrace voltage across the second retrace capacitor varies the magnitude of a retrace voltage that is developed across the first retrace capacitor and, in this way, provides the desired deflection winding current modulation so as to correct for outside and inside pincushion distortion.

Advantageously, by having the modulation switch conductive during only a portion of horizontal retrace, mouseteeth distortion is reduced. Mouseteeth distortion is reduced because, when the modulation switch is nonconductive during the other portion of horizontal retrace, the flyback transformer primary winding is coupled to the retrace resonant circuit via an impedance formed by the second retrace capacitor. Such impedance is high at low frequencies that are associated with mouseteeth distortion. Such frequencies are substantially lower than the retrace resonant frequency. By operating the modulation switch in the switching mode, power dissipation is, advantageously, reduced.

The retrace voltage in a secondary winding of the flyback transformer may be used to provide a synchronizing feedback signal that is used for providing timing information to a phase-control-circuit. The phase-control-circuit generates a control signal that synchronizes the horizontal deflection current to a horizontal synchronizing input signal.

In accordance with a feature of the invention, the second retrace capacitance causes the flyback transformer feedback signal to be maintained in phase with respect to the retrace voltage developed across the deflection winding. Thus, the feedback signal provides correct horizontal timing information of the horizontal deflection current throughout vertical scan. Had the retrace voltages in the flyback transformer and in the deflection winding not been maintained in phase during the entire vertical scan, a raster distortion resulting in a slightly parabolically bent raster in the vertical direction might have occurred.

A television deflection apparatus embodying another aspect of the invention includes a source of a first input signal at a frequency that is related to a first deflection frequency and a retrace resonant circuit. The retrace resonant circuit includes a deflection winding and a first retrace capacitance. A deflection current is generated in the deflection winding and a first retrace pulse voltage is generated in the first retrace capacitance during a retrace interval of a given deflection cycle. A second retrace capacitance is coupled to the retrace resonant circuit for generating in the second retrace capacitance a second retrace pulse voltage during the retrace interval. A supply inductance coupled to a source of an input supply voltage couples the first and second retrace pulse voltages therethrough to a load circuit. A source of a modulation second input signal at a frequency that is related to a second deflection frequency is coupled to a switching arrangement. The switching arrangement varies, in accordance with the second input signal, a difference between a time when the second retrace pulse voltage is initiated and a time when the first retrace pulse voltage is initiated to produce a modulation of the deflection current. When the second retrace pulse voltage is generated, an impedance arrangement, that includes the second retrace capacitance, that is high at frequencies that are substantially lower than a retrace resonance frequency of the retrace resonant circuit, is interposed between the supply inductance and the retrace resonant circuit. The high impedance isolates the supply inductance from the retrace resonant circuit at the lower frequencies.

In the Drawing:
FIGURES 1a-1h illustrate idealized waveforms useful in explaining the circuit of FIGURE 2;
FIGURE 2 illustrates a deflection circuit, embodying an aspect of the invention, that includes outside pincushion distortion correction;
FIGURES 3a-3b illustrate waveforms occurring during horizontal retrace that are useful in explaining the circuit of FIGURE 2;
FIGURE 4 illustrates additional waveforms that are useful in explaining the operation of the circuit of FIGURE 2;
FIGURE 5 illustrates a crosshatch pattern in which "mouseteeth" distortion is uncorrected;
FIGURES 6a-6d illustrate waveforms useful in explaining a current protection feature of the circuit of FIGURE 2;
FIGURE 7 illustrates a second embodiment of the invention that includes inside pincushion distortion correction; and
FIGURES 8a-8c illustrate waveforms associated with the circuit of FIGURE 7.

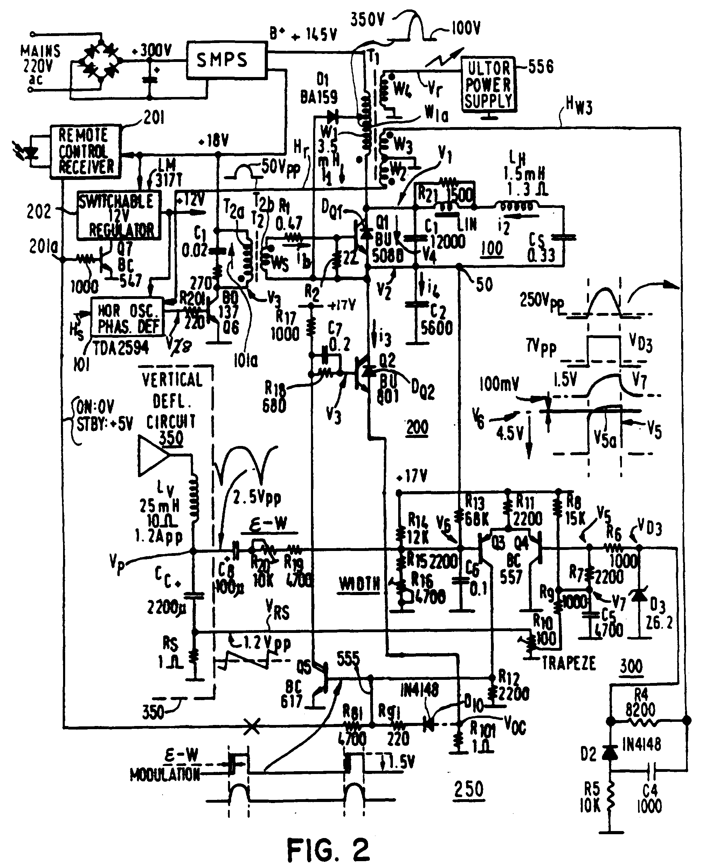

A horizontal deflection circuit 250 of FIGURE 2, embodying an aspect of the invention, provides horizontal deflection in, for example, an FS color cathode ray tube (CRT) type A66EAS00X01. Circuit 250 includes a switching transistor Q1 operating at a horizontal frequency f_{H} and an anti-parallel damper diode D_{Q1}, both being constructed as one integrated circuit. A retrace capacitance C1 is coupled in parallel with transistor Q1 and diode D_{Q1}. A deflection winding L_{H} is coupled in series with an S-shaping trace capacitance Cₛ to form a circuit branch that is coupled in parallel with each of transistor Q1, diode D_{Q1} and retrace capacitance C1 to form a retrace resonant circuit 100 during horizontal retrace.

A phase-control stage 101 that includes a horizontal oscillator and a phase detector, not shown in detail in FIGURES, is responsive to a horizontal synchronizing signal Hₛ. Signal Hₛ is derived from, for example, a video detector of a television receiver, not shown in the FIGURES. Stage 101 applies, via a transistor Q6, a drive voltage 101a to a primary winding T₂ₐ of a driver transformer T2. Secondary winding T_{2b} of transformer T2 is coupled via a voltage divider, that includes resistors R1 and R2, to the base-emitter junction of transistor Q1 for producing a base drive current i_{b} at the horizontal frequency f_{H}. A primary winding W₁ of a flyback transformer T1 is coupled between a source of a B+ voltage and the collector of transistor Q1. A secondary winding W₂ of transformer T1 is coupled to stage 101 to provide a feedback retrace signal Hᵣ for generating drive signal 101a that synchronizes a horizontal deflection current i₂ in winding L_{H} to signal Hₛ.

A switched raster correction circuit 200, embodying a feature of the invention, includes an E-W control circuit 300 that controls the switching timing of a switching transistor Q2. Transistor Q2 is conductive throughout the trace interval and becomes nonconductive during a controllable instant within the retrace interval. The collector of transistor Q2 is coupled to a junction terminal 50 between the emitter of transistor Q1 and retrace capacitor C1. The emitter of transistor Q2 is coupled to ground via a small current sampling resistor R101. A damper diode D_{Q2} ,coupled in parallel with transistor Q2, is constructed with transistor Q2 as one integrated circuit. A second retrace capacitor C2 is coupled between the collector of transistor Q2 and ground. A retrace voltage Vᵣ generated across a winding W₄ of transformer T1 provides a high voltage, used for generating an ultor voltage in an ultor power supply 556 that includes rectifying diodes, not shown in the FIGURES.

A first hypothetical example that is used for explanation purpose represents a first extreme operating condition in which transistor Q2 is maintained conductive throughout trace and retrace. In this case, deflection circuit 250 generates deflection current i₂ in a manner that is well known but without East-West correction. As explained later on, current i₂ is at a maximum peak-to-peak amplitude, in this case.

A second hypothetical example that is also used for explanation purposes, represents a second extreme operating condition in which switching transistor Q2 is in cutoff throughout an entire retrace interval. In the second example, during retrace, a pair of resonant circuits are formed. The first one, resonant circuit 100 of FIGURE 2, includes retrace capacitor C1, winding L_{H} and trace capacitor C_{S}. The second one includes flyback transformer winding W₁ and retrace capacitor C2 that are coupled in series. Considered separately, each of the pair of retrace resonant circuits is tuned to a frequency that is lower than a required nominal retrace frequency. The resonant circuits are coupled to form a combined resonant circuit. Therefore, the resulting common retrace frequency of the combined resonant circuit is higher than each of its constituents and is made equal to the required nominal retrace frequency that is, illustratively, 43 KHz in the PAL system.

As explained before, secondary winding W₂ of transformer T1 provides horizontal synchronizing retrace signal Hᵣ. Each pulse of signal Hᵣ represents the retrace interval in deflection winding L_{H}. Horizontal synchronizing signal Hᵣ is coupled to phase-control-stage 101 for providing feedback synchronization information. The synchronization information contained in the pulses of signal Hᵣ is indicative of the phase of current i₂ in deflection winding L_{H}. Signal Hᵣ and horizontal sync pulses Hₛ are used to adjust the phase and the frequency of the horizontal oscillator output signal that is included in stage 101.

In the second hypothetical example, primary winding W₁ of transformer T1 is coupled to retrace resonant circuit 100 through a capacitive voltage divider that includes capacitors C1 and C2 to form the combined resonant circuit. The combined retrace resonant circuit enables proper synchronization without causing mouseteeth distortion. The advantages of forming such combined retrace resonant circuit are explained in detail in U.S. Patent 4,634,937 in the name of P.E. Haferl, entitled "EAST-WEST CORRECTION CIRCUIT".

During trace, current i₁ in winding W₁ flows through transistor Q1 and through transistor Q2 to ground. During retrace, current i₁ that flows through capacitor C1 also flows through capacitor C2 as retrace current i₄ and causes a retrace voltage V₂ to be developed across retrace capacitor C2.

The amplitude of a retrace voltage V₁, developed across the series coupled capacitor C1 and C2 is stabilized by the B+ voltage that is regulated. Therefore, voltage V₁ is, advantageously, substantially unaffected by the East-West modulation. Retrace voltage V₄, developed across winding L_{H} and across capacitor C1, determines the amplitude of deflection current i₂. Retrace voltage V₄ is equal to retrace voltage V₁ minus retrace voltage V₂. Because current i₃ in transistor Q2 is zero during the second portion of retrace when transistor Q2 is nonconductive, retrace current i₁ flows substantially entirely as current i₄ through capacitor C2 and generates retrace voltage V₂. It follows that in the second hypothetical example in which transistor Q2 is nonconductive throughout retrace, voltage V₂ is at a maximum amplitude. Consequently, voltage V₄ amplitude is at a minimum and deflection current i₂ is also at a minimum in the second hypothetical example.

In accordance with an aspect of the invention, modulation of deflection current is obtained by a modulation of the turn-off instant of transistor Q2 during the first half of the retrace interval in a way that mouseteeth distortions are reduced. By selecting the value of capacitor C1 to be, for example, approximately twice that of capacitor C2, and the value of the inductance of winding W1 to be approximately twice that of winding L_{H}, the retrace frequency remains the same during both the first portion of retrace, when transistor Q2 is conductive, and during the second portion of retrace, when transistor Q2 is nonconductive. Consequently, the phase of voltage V₁ in winding W₁ relative to that of deflection current i₂ is unaffected by the conduction state of transistor Q2. Modulation of the turn-off instant is permissible because both the retrace time and a retrace voltage Vᵣ developed from voltage V₁ in winding W₄ of transformer T1 are, advantageously, substantially unaffected by the state of conductance of transistor Q2, during retrace.

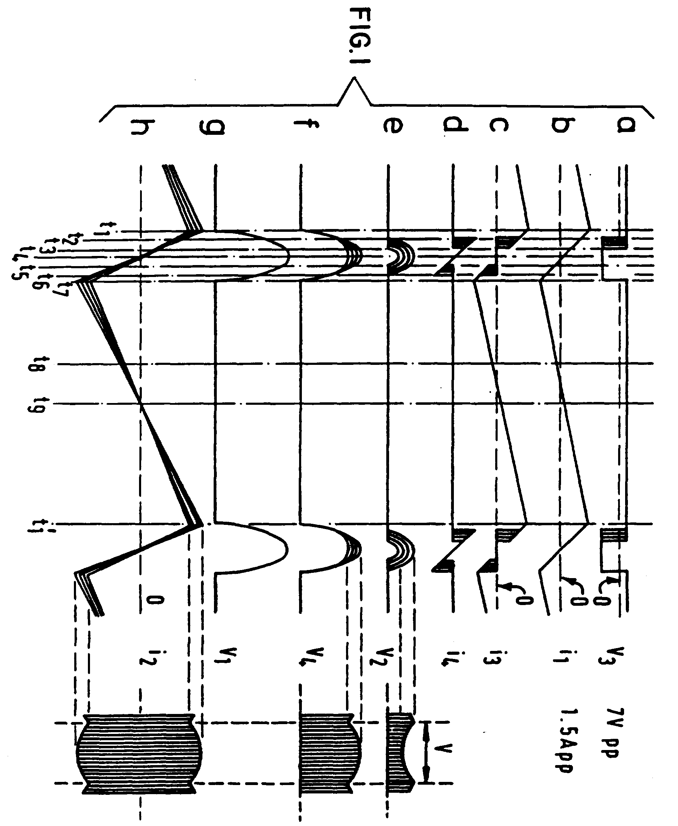

FIGURES 1a-1h illustrate idealized waveforms useful for explaining the operation of the circuit of FIGURE 2. Similar symbols and numerals in FIGURES 2 and in FIGURES 1a-1h indicate similar items or functions.

E-W control circuit 300 of FIGURE 2 generates a pulsed voltage V₃ which drives the base of transistor Q2. Voltage V₃ causes transistor Q2 to be conductive throughout the trace interval. During retrace, the falling edge of voltage V₃ is phase modulated in the range t₂-t₃ of FIGURE 1a. Thus, switching transistor Q2 of FIGURE 2 is conductive prior to time t₂ of FIGURE 1a and switched into cut-off after time t₂ at the phase modulated instant within the range t₂-t₃. When conductive, transistor Q2 clamps retrace voltage V₂ to zero and varies the instant when the generation of voltage v₂ occurs.

Current i₁ in winding W₁ of transformer T1 of FIGURE 2 flows into resonant circuit 100 that includes winding L_{H} and capacitor C1. From resonant circuit 100, current i₁ splits and forms current i₃ and current i₄ when transistor Q2 of FIGURE 2 is nonconductive. When transistor Q2 is turned-off, the decreasing current i₄ of FIGURE 1d charges capacitor C2 of FIGURE 2 until time t₄ of FIGURE 1d, occuring at the center of the retrace interval when currents i₁ and i₄ become zero. As a result, voltage V₂ of FIGURE 1e reaches its peak amplitude at the center of retrace. During the second half of retrace, negative current i₄ of FIGURE 1d, that becomes increasingly more negative, discharges capacitor C2 of FIGURE 2 until voltage V₂ becomes negative. When voltage V₂ becomes sufficiently negative, diode D_{Q2} starts conducting and clamps voltage V₂ to -0.6 voltage, the forward voltage of diode D_{Q2}.

The correction of outside pincushion distortion requires a higher amplitude of deflection current i₂ when scanning lines at the center of the raster than at the top or bottom. At the top of the raster, transistor Q2 is turned off at time t₂ of FIGURE 1a, that is the earliest. Voltage V₂ of FIGURE 1e starts to increase after time t₂. After the center of retrace occurs, voltage V₂ decreases until it becomes zero at time t₆. Because transistor Q2 is turned off at the time t₂ at the top of the raster, the peak amplitude of voltage V₂ is at a maximum; consequently, the peak amplitude of voltage V₄ of FIGURE 1f is at a minimum. From the top toward the center of the raster, the turn-off time of transistor Q2, determined by the falling edge of voltage V₃ of FIGURE 1a, is increasingly delayed within interval t₂ - t₃. The result is a decreasing peak amplitude of voltage V₂ of FIGURE 2, an increasing peak amplitude of voltage V₄ and an increasing peak amplitude of deflection current i₂. At the center of the raster, voltage V₂ starts increasing at time t₃ of FIGURE 1e and becomes zero at time t₅ of each horizontal period. From the center toward the bottom of the raster, the turn-off time of transistor Q2 of FIGURE 2 is increasingly advanced from time t₃ to time t₂ of FIGURE 1a, resulting in an increasing voltage V₂ of FIGURE 2, a decreasing voltage V₄ and a decreasing deflection current i₂. Thus, deflection current i₂ is proportional to retrace voltage V₄ and inversely proportional to retrace voltage V₂ that is modulated in accordance with the turn-off instant of transistor Q2.

The falling edge of voltage V₃ of FIGURE 1a is phase modulated in a parabolic manner at a vertical rate to obtain the vertical rate envelopes shown in conjunction with waveforms 1e, 1f and 1h. Advantageously, the variation of the turn-off time of transistor Q2 of FIGURE 2 modulates also the time when voltage V₂ of FIGURE 1e becomes zero near the end of retrace.

In accordance with an inventive feature, the center of the retrace pulse waveform of voltage V₂ during horizontal retrace is maintained the same relative to the center of horizontal retrace time t₄ throughout vertical scan. Thus, voltages V₄ and V₂ of FIGURE 2 are maintained in phase with respect to voltage V₁. It follows that, advantageously, signal Hᵣ is maintained in phase with deflection current i₂.

Signal Hᵣ developed across winding W₂ provides phase information of the phase of deflection current i₂. Signal Hᵣ is applied to stage 101 for synchronizing the horizontal oscillator of stage 101 to sync pulses Hₛ of the video signal. Because capacitor C2 couples winding W₁ to winding L_{H} to form a combined resonant circuit, the phase information of signal Hᵣ is substantially identical to that of deflection current i₂. A further advantage provided by the switched operation of transistor Q2 is that inductive components are not required to be coupled in series with transistor Q2. Also, the switched operation of transistor Q2 results in low power dissipation in transistor Q2. Therefore, transistor Q2 may not require a heat sink. An additional advantage over other east-west circuits such as a conventional diode modulator is that deflection current i₂ does not flow through a damper diode during the second half of trace, resulting in lower deflection losses and lower asymmetric linearity error.

As explained before, during retrace, deflection resonant circuit 100 is coupled to flyback transformer T1 by capacitor C2 having a high impedance, after transistor Q2 becomes nonconductive. When transistor Q2 becomes nonconductive, the ultor voltage rectifying diodes, not shown, are conducting. The high impedance of capacitor C2 substantially isolates windings L_{H} and W₁ at frequencies associated with mouseteeth distortion that are substantially lower than the retrace frequency of resonant circuit 100 during retrace; thereby, raster distortions known as "mouseteeth" are prevented from occurring.

In accordance with a feature of the invention, junction terminal 50 between capacitors C1 and C2 is clamped to ground potential by transistor Q2 during the entire trace interval. Therefore, raster disturbances referred to as "Organ Pipes" do not appear. Organ Pipes type raster disturbances may occur if such clamping were not used as a result of oscillatory current or ringings in the flyback transformer primary current. Such ringings are suppressed because transistor Q1 is clamped to ground by transistor Q2 during the entire trace interval.

Advantageously, damper diodes D_{Q1} and D_{Q2} may be constructed with the corresponding transistor using the integrated circuit technology for further reducing the required discrete components count.

A protection diode D1 is coupled between the collector of transistor Q2 and a terminal W1a of primary winding W₁ of transformer T1. Diode D1 protects transistor Q2 from excessive peak voltage that may occur when power is initially turned on. Transistor Q2 is protected by diode D1 which limits voltage V₂ to a maximum of 350V. Transformer T2 has, preferably, 400V isolation capability between the primary and secondary windings.

A remote control receiver 201 generates an on/off control signal 201a that is coupled to an on/off transistor switch Q7 of a +12V regulator. When transistor Q7 is nonconductive, an output supply voltage +12V is generated that causes phase-control-stage 101 to be energized during power-up operation. When transistor Q7 is conductive, stage 101 is de-energized that causes stand-by mode operation. During a transition to the stand-by mode of operation, phase-control-stage 101 supplies base drive to the base of transistor Q6 to cause driver transistor Q6 of transformer T2 to be turned-off.

After, for example, the transition from normal or power-up operation to the stand-by mode operation there may still be energy stored in primary winding T₂ₐ of transformer T2 of FIGURE 2. This energy may continue producing base current i_{b} in deflection transistor Q1 until a magnitude of voltage 101a across primary winding T₂ₐ of transformer T2 decreases to zero. As a result, a final deflection cycle may be generated with an extended but undefined time duration that ends when transistor Q1 ceases to conduct. Consequently, currents i₁, i₂ and i₃ might increase excessively and destroy transistors Q1 and Q2.

To prevent such a possibility, on/off control signal 201a is coupled through a resistor R81 and a conductor 555 to the base electrode of a transistor Q5 that provides base drive to transistor Q2, causing transistor Q2 to turn off immediately after the power-on-to-standby transition. Since both transistors Q1 and Q2 are coupled in series, turning off transistor Q2 causes the current in both transistors to cease. Thus transistors Q1 and Q2 are protected. However, such fast shut-down arrangement may require a fast spot suppression circuit to prevent beam spot related damage to the CRT, not shown.

An alternative protection arrangement, which advantageously, may not require fast spot suppression is also shown in FIGURE 2. In such preferred arrangement, a feedback arrangement that includes a series arrangement of a diode D10 and a resistor R91 is coupled between the emitter of transistor Q2, as shown by the dashed line, and the base of transistor Q5, via conductor 555. When such feedback arrangement is used, the emitter of transistor Q2 is coupled to ground via current sampling resistor R101, causing current i₃ to be sampled across resistor R101. A resulting voltage V_{oc} developed across resistor R101 controls the base voltage of transistor Q5. When voltage V_{oc} across resistor R101 exceeds +1.8V, transistor Q5 is turned on by voltage V_{oc} and reduces the base drive of transistor Q2. Thus, current i₃ is limited to a peak of 1.8 ampere when, for example, resistor R101 equals 1 ohm.

The feedback provided by diode D10 and resistor R91, advantageously, protects both transistors Q1 and Q2 that are coupled in series during operation and, in particular, during the power-up-to-standby transition. It should be understood that such feedback arrangement may also be used together with, or instead of the arrangement in which signal 201a is coupled to the base of transistor Q5 that was explained before. When, for example, both arrangements are used together, current i₃ may become substantially reduced to, for example, zero for providing the required over-current protection or for providing on/off operation.

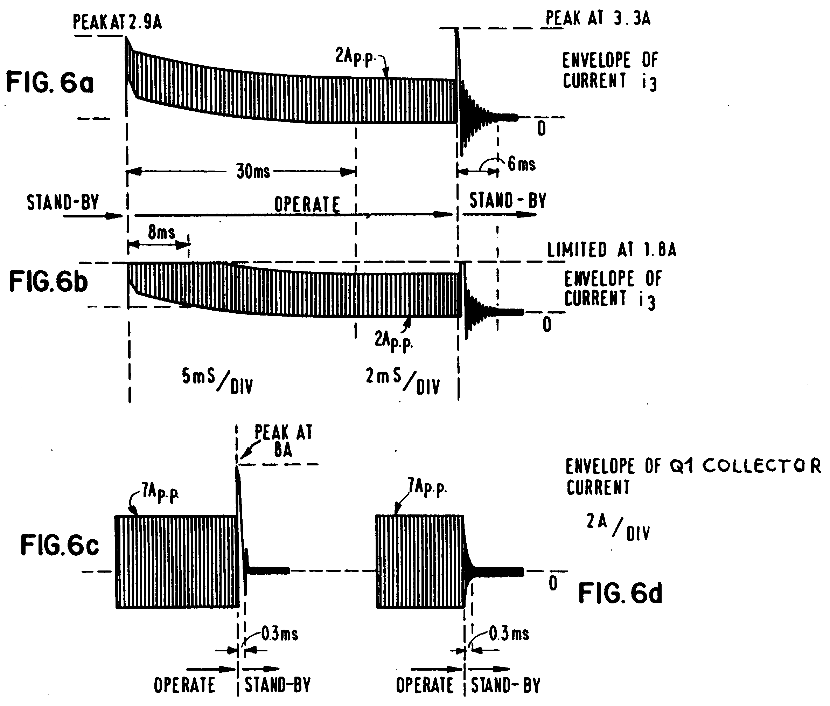

FIGURE 6a illustrates an envelope of a waveform of current i₃ of FIGURE 2 immediately after corresponding transitions between normal operation power-up mode and standby mode without the protection circuit, that would occur if conductor 555 were disconnected for disabling the operation of the protection circuit. Similarly, FIGURE 6b illustrates the envelope of the waveform of current i₃ of FIGURE 2 when conductor 555 is connected that enables the operation of the protection circuit. Note that current i₃ of FIGURE 6b is limited to the maximum of 1.8 amperes. Likewise, FIGURE 6c illustrates an envelope of collector current of Q1 when the protection circuit is disabled and FIGURE 6d illustrates the envelope of collector current of Q1 when the protection circuit is enabled. The operation of the protection circuit is also discussed in U.K. Patent Application 8805757, entitled PROTECTION ARRANGEMENT OF A DEFLECTION CIRCUIT, in the name of the same Applicant, filed 10 March 1988.

E-W control circuit 300 of FIGURE 2 includes a differential amplifier formed by transistors Q3 and Q4 and Darlington driver transistor Q5 which drives switching transistor Q2. The differential amplifier that includes transistors Q3 and Q4 compares a vertical parabola voltage V₆ to an exponentially shaped ramp portion V₅ₐ of a voltage V₅ having a waveform that is shown in FIGURE 2. The crossover points of the compared voltages determines the timing of control voltage V₃ of FIGURE 1a.

To develop voltage V₅ of FIGURE 2, horizontal retrace pulses H_{w3} of FIGURE 2, developed in a winding W₃ of transformer T1, are coupled via a resistor R4 to a zener diode D3. A speed-up network that includes a capacitor C4, a resistor R5 and a diode D2 generates a gating pulse V_{D3} across diode D3 having a leading edge with a fast rise time. Faster leading edge, results,advantageously, in a larger dynamic range of E-W control circuit 300. Pulse V_{D3} across diode D3 is applied via resistors R6 and R7 to a capacitor C5 and to a resistor R9 for generating the exponentially shaped ramp portion V₅ₐ of voltage V5. Pulsed voltage V5 that includes exponentially increasing top portion V₅ₐ is applied to the base of transistor Q4. A vertical rate parabolic voltage Vₚ of FIGURE 2 that includes a superimposed sawtooth voltage is coupled from a DC blocking capacitor C_{c} of a conventional vertical deflection circuit 350 to the base of transistor Q3 via a capacitor C8, a resistor R20 and a resistor R19. Resistors R14, R15 and R16 provide dc bias to the base of transistor Q3. Voltage V₂ that is coupled via a resistor R13 to the base of transistor Q3 and to an integrating capacitor C6 provides a negative feedback, causing the vertical rate envelope of voltage V₂ to track parabolic voltage Vₚ that is developed in capacitor C_{c}.

A vertical sawtooth voltage V_{RS} developed across a sampling resistor Rₛ is coupled, via a resistor R10 and a resistor R9, to a capacitor C5 for developing a voltage V₇ having an exponential upramping portion at a peak amplitude that is determined by voltage V_{RS}. Voltage V₇ is coupled to the base of transistor Q4 of E-W control circuit 300. In this way, Voltage V_{RS} is also coupled via capacitor C_{c} to the base of transistor Q3. Because voltage V_{RS} is applied in a differential manner, voltage V_{RS} is prevented from substantially affecting the switching operation of transistors Q3 and Q4. A vertical parabola voltage V₆ developed at the base of transistor Q3 is compared to horizontal ramp voltage V₅. The crossover points of voltages V₅ and V₆ determine the timing of the leading and trailing edges of voltage V₃, as indicated before.

Exponentially shaped ramp portion V₅ₐ of voltage V₅ linearizes the east-west raster correction or modulator circuit 200 by compensating for the decreasing level of current i₁ of FIGURE 1b, during retrace. Linearization occurs because a small amount of modulation of voltage V₃ near time t₂ of FIGURE 1a results in a higher amplitude modulation of voltage V₂ of FIGURE 1e than the same amount of modulation of voltage V₃ near time t₃ of FIGURE 1a. This is so because the amplitude of each of currents i₁ and i₄ of FIGURES 1b and 1d, respectively, is higher at time t₂ than at time t₃ and because voltage V₂ is proportional to the value of ∫i₄. dt. The exponentially shaped ramp voltage V₅ is steeper near time t₂ than at time t₃ of FIGURE 1g. Consequently, for a given voltage variation at the base of transistor Q3, the the modulation of voltage V₃ is smaller around time t₂ than around time t₃. Thus the exponentially shaped ramp portion V₅ₐ of voltage V₅ linearizes the operation of E-W raster correction circuit 200. Resistor R15 raises the dc average of voltage V₅. Compensation of picture width variations as a function of beam current, that may be referred to as anti-breathing, may be applied via the base of transistor Q3.

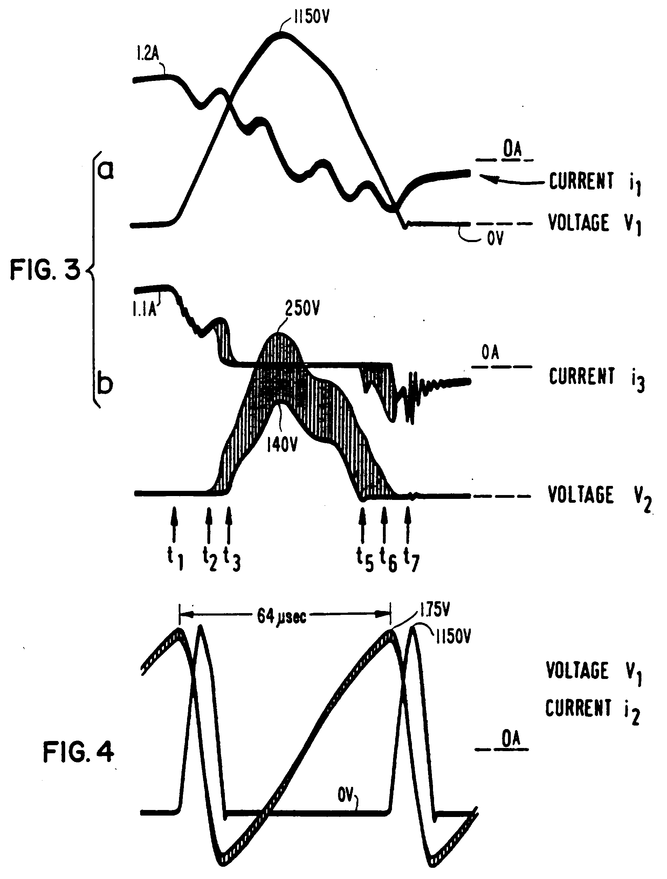

FIGURES 3a-3b and 4 illustrate waveforms obtained in operating horizontal deflection circuit 250 of FIGURE 2. Similar symbols and numerals in FIGURES 1a-1h, 2, 3a-3b and 4 indicate similar items or functions. Advantageously, voltage V₁ of FIGURE 3a and current i₁ are substantially unmodulated. Between time t₂ and t₃ of FIGURE 3b transistor Q2 of FIGURE 2 is switched to cutoff. Diode D_{Q2} starts conducting between time t₅ and t₆ of FIGURE 3b. Advantageously, voltage V₂ of FIGURE 3b is centered around the center of voltage V₁ of FIGURE 3a. When voltage V₂ of FIGURE 3b is generated, current i₃ of FIGURE 3b is zero. Note that deflection current i₂ of FIGURE 4 is modulated to provide outside pincushion distortion correction.

Transistor Q5 of FIGURE 2, having a base that is coupled to the junction of a load resistor R12 and a collector of transistor Q3, applies a base drive to transistor Q2 from a load resistor R17 that is coupled to the collector of transistor Q5. The collector of transistor Q5 is coupled via a parallel arrangement of a capacitor C7 and a resistor R18 for generating a fast transition of a falling edge portion of voltage V₃ to obtain a fast turn-off of transistor Q2. The fast turn-off allows interrupting current i₃ immediately after time t₁ of FIGURE 1c and allows using the full modulation range between time t₁ and t₄. Illustratively, the turn-off delay of transistor Q2 of FIGURE 2 is less than 1 microsecond. The use of a MOSFET in place of Q2 may further reduce the turn-off delay. The fast turn-off feature may be desirable in a situation that requires a deflection current at, for example, a higher frequency such as 2xf_{H}.

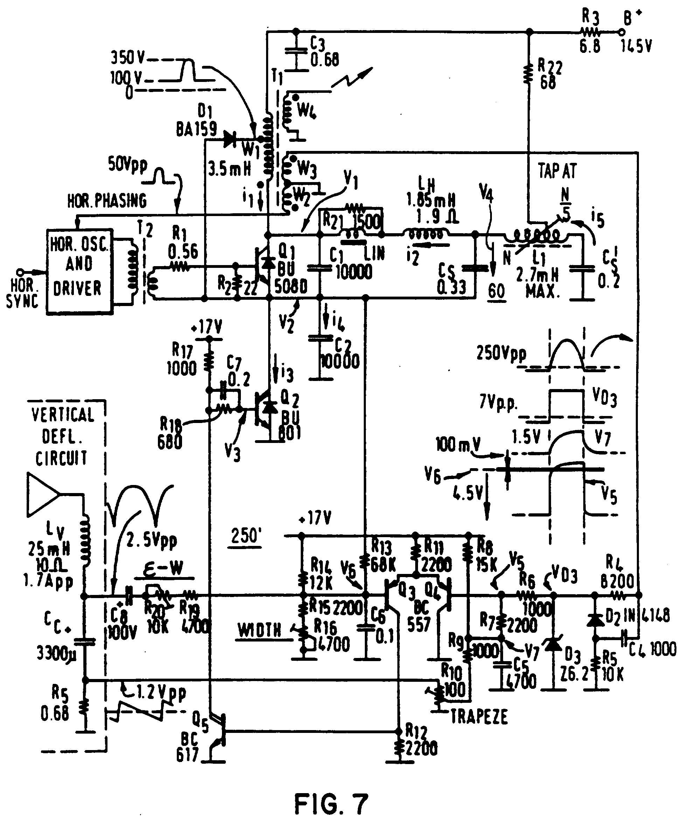

FIGURE 7 illustrates a horizontal deflection circuit 250′ that is similar to circuit 250 of FIGURE 2 and that is used for providing horizontal scanning in, for example, a Philips 45AX Picture tube, not shown. Similar numbers and symbols in FIGURES 7 and 2 indicate similar items or functions. However, circuit 250′ of FIGURE 7 provides, in addition to outside pincushion correction that is provided as explained before with respect to FIGURE 2, also inside pincushion correction. Inside pincushion correction is obtained by the operation of a resonance circuit 60 that includes an inductor L1, a capacitor C′_{S} and that is coupled to a resistor R22. An inside pincushion correction modulation current i₅, modulated by voltage V₂, flows through trace capacitor C_{S} and through transistor Q2. Current i₅ modulates the trace voltage across capacitor C_{S}. The amount of inside correction may be adjusted by adjusting the value of inductor L1. This adjustment, however, is not critical, and a fixed coil of, for example, 2.2mH may be used. The required value of capacitor C2 of FIGURE 7 is greater than that in the circuit of FIGURE 2 because inductor L1 of FIGURE 7 is coupled in parallel with winding W₁ of transformer T1 during retrace. The manner by which a current such as current i₅ is modulated to provide inside pincushion correction is described in more detail in U.S. Patent No. 4,719,392, entitled RASTER CORRECTION CIRCUIT, in the name of P.E. Haferl.

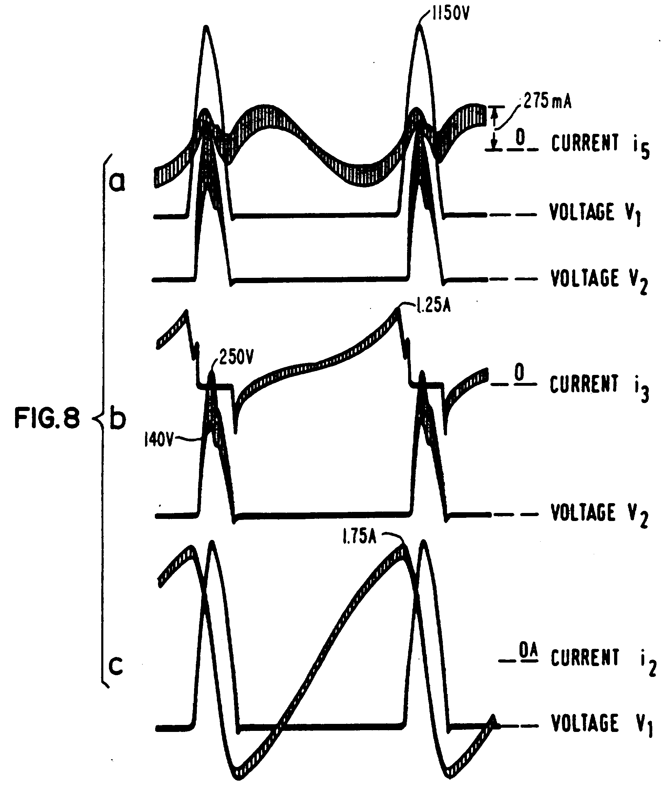

FIGURES 8a-8c illustrate waveforms obtained during operation of circuit 250′ of FIGURE 7. Similar numerals and symbols in FIGURES 8a-8c and 7 illustrate similar items or functions. Note that current i₃ of FIGURE 8b is anti-"S"-shaped during trace, as a result of current i₅ of FIGURE 7. Without inside pincushion correction, current i₃ would have basically increased in a linear manner, as ideally shown in FIGURE 1c. Advantageously, transistor Q2 of FIGURE 7 also provides a current path for current i₅, during trace. Note that both currents i₅ of FIGURE 8a and current i₃ of FIGURE 8b are modulated to provide inside pincushion distortion correction.

## Claims

1. A television deflection apparatus, comprising:
a source of a first input signal (101a) at a frequency that is related to a first deflection frequency;
a retrace resonant circuit, including a deflection winding (LH) and a first retrace capacitance (C1);
first switching means (Q1) responsive to said first input signal and coupled to said retrace resonant circuit for generating a deflection current in said deflection winding and a first retrace pulse voltage in said first retrace capacitance during a retrace interval of a given deflection cycle;
a second retrace capacitance (C2) coupled to said retrace resonant circuit for generating in said second retrace capacitance a second retrace pulse voltage;
a source (SMPS) of an input supply voltage;
a load circuit (556);
a supply inductance (T1) coupled to said source of input supply voltage and to said first switching means for coupling said first and second retrace pulse voltages therethrough to said load circuit and for replenishing energy losses in said retrace resonant circuit during said retrace interval; and
a source of a modulation second input signal (V3);
**characterized by**
second switching means (Q2), responsive to said second (V3) input signal, operated only during said retrace interval, and coupled to said second retrace capacitance (C2), for varying, in accordance with said second input signal (V3), a time difference between initiation of said second retrace pulse voltage (V2) during said retrace interval and initiation of said first retrace pulse voltage (V1) to produce a modulation of said deflection current (i2) such that when said second retrace pulse voltage (V2) is generated, an impedance arrangement (C2) is interposed in the current path of said supply inductance (W1) and said retrace resonant circuit (100), said impedance arrangement including said second retrace capacitance (C2) and exhibiting a high impedance at frequencies that are substantially lower than a retrace resonance frequency of said retrace resonant circuit (100) for isolating said supply inductance (W1) from said retrace resonant circuit (100) at said lower frequencies.

2. An apparatus according to Claim 1 characterized in that said second switching means (Q2) produces a variation of a pulse width of said second retrace pulse voltage (V2) in accordance with said second input signal (V3) such that a phase difference between corresponding predetermined portions of said first (V1) and second (V2) retrace pulse voltages remains substantially constant when said pulse width of said second retrace pulse voltage (V2) varies for maintaining a third retrace pulse voltage (Hr), generated in said supply inductance (W1), in correct synchronization with said deflection current (i2) when said pulse width of said second retrace pulse voltage (V2) varies.

3. An apparatus according to Claim 1 characterized in that said second switching means (Q2) operates in a conductive state during a first portion of said first retrace pulse voltage (V1) for applying a low impedance across said second retrace capacitance (C2) that delays the generation of said second retrace pulse voltage (V2) and wherein said second switching means (Q2) operates in a nonconductive state for removing said low impedance to enable the generation of said second retrace pulse voltage (V2) during a second portion of said first retrace pulse voltage (V1).

4. An apparatus according to Claim 3 characterized in that said second switching means (Q2) is conductive until said first portion of said first retrace pulse voltage (V1) having a length that varies in accordance with said second input signal (V3) has elapsed to form a low impedance between a pair of terminals of said second retrace capacitance (C2) during said first portion for preventing the generation of said second retrace pulse voltage (V2), in accordance with said second input signal (V3), as long as said second switching means (Q2) is conductive, and wherein said second switching means (Q2) is nonconductive following said first portion for enabling the generation of said second retrace pulse voltage (V2).

5. An apparatus according to Claim 1 characterized in that said supply inductance (W1) comprises a winding of a flyback transformer (T1) that is coupled through said second retrace capacitance (C2) to said retrace resonant circuit (100) when said second switching means (Q2) is nonconductive, and that is coupled through said second switching means (Q2) to ground when said second switching means (Q2) is conductive to form a combined retrace resonant circuit having a resonance frequency that is substantially unchanged when said second switching means (Q2) is conductive and when it is nonconductive.

6. An apparatus according to Claim 1 characterized in that said second switching means (Q2) establishes a current path in series with said first switching means (Q1) during a portion of said given deflection cycle and in parallel with said second retrace capacitance (C2), and wherein said second retrace capacitance (C2) is coupled to a first junction terminal (50) between said first (Q1) and second (Q2) switching means and in series with said first retrace capacitance (C1).

7. An apparatus according to Claim 1 characterized by a trace capacitance (CS) that is coupled to said deflection winding (LH) to form a first trace resonant circuit during a trace interval of said deflection cycle and a second trace resonant circuit (60) that is coupled to said trace capacitance (CS) to provide an inside pincushion distortion correction wherein said second retrace pulse voltage (V2), developed in said second retrace capacitance (C2) when said second switching means (Q2) is nonconductive, generates an inside pincushion distortion correction modulation current in said second trace resonant circuit (60) that is modulated in accordance with said second retrace pulse voltage (V2).

8. An apparatus according to Claim 1 characterized by means coupled to said retrace resonant circuit (100) for generating, during a horizontal retrace interval, a substantially square wave pulse (V5) having an exponentially shaped top portion, said square wave pulse being coupled to a first input terminal (base of Q4) of a differential amplifier (Q3,Q4) of an East-West raster correction control circuit (300), a second input terminal (base of Q3) of said amplifier being responsive to a signal (V6) at a vertical rate, for producing, at an output terminal (collector of Q3) of said differential amplifier, a modulation signal that is coupled to a control terminal (base) of said second switching means (Q2) having a phase that varies in accordance with said vertical rate signal (V6), wherein said top portion of said square wave pulse voltage (V5) varies in a manner that improves the linearity of said East-West raster correction control circuit (300) with respect to variations of said vertical rate signal (V6).

9. A deflection apparatus with raster distortion correction, comprising:
a source of a first input signal (101a) at a frequency that is related to a horizontal deflection frequency;
a retrace resonant circuit including a deflection winding (LH) and a first retrace capacitance (C1);
a first transistor switch (Q1) responsive to said first input signal and coupled to said retrace resonant circuit for generating a horizontal deflection current in said deflection winding and a first retrace pulse voltage in said first retrace capacitance;
a second retrace capacitance (C2) coupled in series with said retrace resonant circuit for generating in said second retrace capacitance a second retrace pulse voltage;
a source of a second input signal (VP)at a frequency that is related to a vertical deflection frequency;
means (101) responsive to said first and second input signals for generating a control signal (101a) at a horizontal frequency having a phase that varies in accordance with said vertical deflection frequency; **characterized by**
a second switch (Q2) operated only during a retrace interval and coupled to said first transistor switch (Q1) such that, during a portion of a given cycle of said deflection current (i2) that occurs during a trace interval, said first transistor switch (Q1) and said second switch (Q2) establish a series current path, said second switch (Q2) being responsive to said control signal (V3) and coupled to said second retrace capacitance (C2) for producing a variation of a time when said second retrace pulse voltage (V2) is initiated during retrace of said resonant retrace circuit relative to a time when said first retrace pulse voltage (V1) is initiated while maintaining substantially constant a phase difference between the two retrace pulse voltages.

10. An apparatus according to Claim 9, characterized in that a center point between said time when said second retrace pulse voltage (V2) is initiated and a time when said second retrace pulse voltage (V2) is terminated remains substantially in phase with said first retrace pulse voltage (V1).

## Patentansprüche

1. Ablenkschaltung für ein Fernsehgerät umfassend:
eine Quelle für ein erstes Eingangssignal (101a) mit einer Frequenz, die auf eine erste Ablenkfrequenz bezogen ist;
eine Rücklauf-Resonanzschaltung mit einer Ablenkwicklung (LH) und einer ersten Rücklauf-Kapazität (C1);
erste Schaltmittel (Q1), die auf das erste Eingangssignal ansprechen und mit der Rücklauf-Resonanzschaltung verbunden sind, um in der Ablenkwicklung einen Ablenkstrom und eine erste Rücklauf-Impulsspannung in der ersten Rücklauf-Kapazität während eines Rücklauf-Intervalls eines gegebenen Ablenkzyklus zu erzeugen;
eine zweite Rücklauf-Kapazität (C2), die mit der Rücklauf-Resonanzschaltung verbunden ist, um in der zweiten Rücklauf-Kapazität eine zweite Rücklauf-Impulsspannung zu erzeugen;
eine Quelle (SMPS) für eine Eingangs-Versorgungsspannung;
eine Lastschaltung (556);
eine Versorgungs-Induktivität (T1), die mit der Quelle für die Eingangs-Versorgungsspannung und mit den ersten Schaltmitteln verbunden ist, um die ersten und zweiten Rücklauf-Impulsspannungen durch sie hindurch der Lastschaltung zuzuführen, und um Energieverluste in der Rücklauf-Resonanzschaltung während des Rücklauf-Intervalls wiederaufzufüllen; und
eine Quelle für die Modulation eines zweiten Eingangssignals (V3);
gekennzeichnet durch
zweite Schaltmittel (Q2), die auf das zweite Eingangssignal (V3) ansprechen, die nur während des Rücklauf-Intervalls betätigt werden, und die mit der zweiten Rücklauf-Kapazität (C2) verbunden sind, um entsprechend dem zweiten Eingangssignal (V3) eine Zeitdifferenz zwischen dem Beginn der zweiten Rücklauf-Impulsspannung (V2) während des Rücklauf-Intervalls und dem Beginn der ersten Rücklauf-Impulsspannung (V1) zu verändern, um eine Modulation des Ablenkstroms (i2) derart zu erzeugen, daß bei Erzeugung der zweiten Rücklauf-Impulsspannung (V2) eine Impedanzanordnung (C2) in den Stromweg der Versorgungs-Induktivität (W1) und der Resonanzschaltung (100) zwischengeschaltet wird, wobei die Impedanzanordnung die zweite Rücklauf-Kapazität (C2) enthält und eine hohe Impedanz bei Frequenzen aufweist, die nennenswert niedriger als eine Rücklauf-Resonanzfrequenz der Rücklauf-Resonanzschaltung (100) sind, um die Versorgungs-Induktivität (W1) von der Rücklauf-Resonanzschaltung (100) bei den niedrigeren Frequenzen zu isolieren.

2. Schaltung nach Anspruch 1, dadurch gekennzeichnet, daß die zweiten Schaltmittel (Q2) eine Änderung der Impulsbreite der zweiten Rücklauf-Impulsspannung (V2) gemäß dem zweiten Eingangssignal (V3) derart erzeugen, daß eine Phasendifferenz zwischen entsprechenden vorgegebenen Teilen der ersten (V1) und zweiten (V2) Rücklauf-Impulsspannungen im wesentlichen konstant bleibt, wenn die Impulsbreite der zweiten Rücklauf-Impulsspannung (V2) sich ändert, um eine dritte Rücklauf-Impulsspannung (Hr) aufrechtzuerhalten, die in der Versorgungs-Induktivität (W1) in richtiger Synchronisation mit dem Ablenkstrom (i2) erzeugt wird, wenn sich die Impulsbreite der zweiten Rücklauf-Impulsspannung (V2) ändert.

3. Schaltung nach Anspruch 1, dadurch gekennzeichnet, daß die zweiten Schaltmittel (Q2) während eines ersten Teils der ersten Rücklauf-Impulsspannung (V1) in einem leitenden Zustand arbeiten, um über der zweiten Rücklauf-Kapazität (C2) eine niedrige Impedanz anzulegen, die die Erzeugung der zweiten Rücklauf-Impulsspannung (V2) verzögert, und wobei die zweiten Schaltmittel (Q2) in einem nichtleitenden Zustand arbeiten, um die niedrige Impedanz zu entfernen und die Erzeugung der zweiten Rücklauf-Impulsspannung (V2) während des zweiten Teils der ersten Rücklauf-Impulsspannung (V1) zu ermöglichen.

4. Schaltung nach Anspruch 3, dadurch gekennzeichnet, daß die zweiten Schaltmittel (Q2) leitend sind, bis der erste Teil der ersten Rücklauf-Impulsspannung (V1), der eine Länge hat, die sich mit dem zweiten Eingangssignal ändert, abgelaufen ist, um eine niedrige Impedanz zwischen zwei Anschlüssen der zweiten Rücklauf-Kapazität (C2) während des ersten Teils zu bilden, um die Erregung der zweiten Rücklauf-Impulsspannung (V2) gemäß dem zweiten Eingangssignal (V3) zu verhindern, solange die zweiten Schaltmittel (Q2) leitend sind, und wobei die zweiten Schaltmittel (Q2) nach dem ersten Teil nichtleitend sind, um die Erzeugung der zweiten Rücklauf-Impulsspannung (V2) zu ermöglichen.

5. Schaltung nach Anspruch 1, dadurch gekennzeichnet, daß die Versorgungs-Induktivität (W1) eine Wicklung eines Zeilenendtransformators (T1) umfaßt, die über die zweite Rücklauf-Kapazität (C2) mit der Rücklauf-Resonanzschaltung (100) verbunden ist, wenn die zweiten Schaltmittel (Q2) nichtleitend sind, und die über die zweiten Schaltmittel (Q2) mit Masse verbunden ist, wenn die zweiten Schaltmittel (Q2) leitend sind, um eine kombinierte Rücklauf-Resonanzschaltung zu bilden, die eine Resonanzfrequenz hat, die weitgehend nicht verändert wird, wenn die zweiten Schaltmittel (Q2) leitend oder nichtleitend sind.

6. Schaltung nach Anspruch 1, dadurch gekennzeichnet, daß die zweiten Schaltmittel (Q2) einen Stromweg in Reihe mit den ersten Schaltmitteln (Q1) während eines Teils des gegebenen Ablenkzyklus und parallel zu der zweiten Rücklauf-Kapazität (C2) errichten, und daß die zweite Rücklauf-Kapazität (C2) mit einem ersten Verbindungsanschluß (50) zwischen den ersten (Q1) und zweiten (Q2) Schaltmitteln und in Reihe mit der ersten Rücklauf-Kapazität (C1) verbunden ist.

7. Schaltung nach Anspruch 1, gekennzeichnet durch eine Hinlauf-Kapazität (CS), die mit der Ablenkwicklung (LH) verbunden ist, um eine erste Hinlauf-Resonanzschaltung während eines Hinlauf-Intervalls des Ablenkzyklus und eine zweite Hinlauf-Resonanzschaltung (60) zu bilden, die mit der Hinlauf-Kapazität (CS) verbunden ist, um eine innere Kissenverzerrungs-Korrektur zu liefern, wobei die zweite Rücklauf-Impulsspannung (V2), die in der zweiten Rücklauf-Kapazität (C2) aufgebaut wird, wenn die zweiten Schaltmittel (Q2) nichtleitend sind, einen inneren Kissenverzerrungs-Korrektur-Modulationsstrom in der zweiten Hinlauf-Resonanzschaltung (60) erzeugen, der gemäß der zweiten Rücklauf-Impulsspannung (V2) moduliert wird.

8. Schaltung nach Anspruch 1, gekennzeichnet durch Mittel, die mit der Rücklauf-Resonanzschaltung (100) verbunden sind, um während eines Horizontal-Rücklauf-Intervalls einen etwa rechteckförmigen Wellenimpuls (V5) zu erzeugen, der einen exponentiell geformten oberen Teil hat, wobei der Rechteck-Wellen-Impuls einem ersten Eingangsanschluß (Basis von Q4) eines Differentialverstärkers (Q3, Q4) einer Ost-West-Raster-Korrekturschaltung (300) zugeführt wird, wobei ein zweiter Eingangsanschluß (Basis von Q3) des Verstärkers auf ein Signal (V6) mit einer Vertikal-Rate anspricht, um an einem Ausgangsanschluß (Kollektor von Q3) des Differentialverstärkers ein Modulationssignal zu erzeugen, das einem Steueranschluß (Basis der zweiten Schaltmittel Q2) zugeführt wird, das eine Phase hat, die sich mit dem eine Vertikal-Rate aufweisenden Signal (V6) ändert, wobei der obere Teil der Rechteck-Wellen-Impulsspannung (V5) sich in einer Weise ändert, die die Linearität der Ost-West-Raster-Korrektur-Steuerschaltung in bezug auf Änderungen des eine Vertikal-Rate aufweisenden Signals (V6) verbessert.

9. Ablenkschaltung mit Raster-Verzerrungs-Korrektur umfassend:
eine Quelle für ein erstes Eingangssignal (101a) mit einer Frequenz, die auf eine Horizontal-Ablenkfrequenz-bezogen ist;
eine Rücklauf-Resonanzschaltung mit einer Ablenk-Wicklung (LH) und einer ersten Rücklauf-Kapazität (C1);
einen ersten Transistorschalter (Q1), der auf das erste Eingangssignal anspricht und mit der Rücklauf-Resonanzschaltung verbunden ist, um in der Ablenkwicklung einen Horizontal-Ablenkstrom und einer erste Rücklauf-Impulsspannung in der ersten Rücklauf-Kapazität zu erzeugen;
eine zweite Rücklauf-Kapazität (C2), die in Reihe mit der Rücklauf-Resonanzschaltung geschaltet ist, um in der zweiten Rücklauf-Kapazität eine zweite Rücklauf-Impulsspannung zu erzeugen;
eine Quelle für ein zweites Eingangssignal (VP) mit einer Frequenz, die auf eine Vertikal-Ablenkfrequenz bezogen ist;
Mittel (101), die auf das erste und zweite Eingangssignal ansprechen, um ein Steuersignal (101a) mit einer Horizontal-Frequenz zu erzeugen, dessen Phase sich mit der Vertikal-Ablenkfrequenz ändert;
gekennzeichnet durch:
einen zweiten Schalter (Q2), der nur während eines Rücklauf-Intervalls betätigt wird, und der mit dem ersten Transistorschalter (Q1) so verbunden ist, daß während eines Teils eines gegebenen Zyklus des Ablenkstroms (i2), der während eines Hinlauf-Intervalls auftritt, der erste Transistorschalter (Q1) und der zweite Transistorschalter (Q2) einen Reihen-Stromweg errichten, wobei der zweite Schalter (Q2) auf das Steuersignal (V3) anspricht und mit der zweiten Rücklauf-Kapazität (C2) verbunden ist, um eine Zeitänderung zu erzeugen, wenn die zweite Rücklauf-Impulsspannung (V2) während des Rücklaufs der Resonanz-Rücklaufschaltung relativ zu einer Zeit ausgelöst wird, wenn die erste Rücklauf-Impulsspannung (V1) ausgelöst wird, während ein im wesentlichen konstanter Phasenunterschied zwischen den beiden Rücklauf-Impulsspannungen aufrechterhalten wird.

10. Schaltung nach Anspruch 9, dadurch gekennzeichnet, daß ein Mittenpunkt zwischen der Zeit, wenn die zweite Rücklauf-Impulsspannung (V2) ausgelöst wird und einer Zeit, bei der die zweite Rücklauf-Impulsspannung (V2) beendet ist, weitgehend in Phase mit der ersten Rücklauf-Impulsspannung (V1) bleibt.

## Revendications

1. Appareil de déviation pour télévision, intégrant :
la source d'un premier signal d'entrée (101a) à une fréquence liée à une première fréquence de déviation ;
un circuit résonnant de retour de spot, intégrant un enroulement de déviation (gauche) et une première capacité de retour de spot (C1) ;
un premier moyen de commutation (Q1) réagissant audit premier signal d'entrée et couplé audit circuit résonnant de retour de spot pour générer une intensité de déviation dans ledit enroulement de déviation et une première tension d'impulsion de retour dans ladite première capacité de retour de spot pendant l'intervalle de retour de spot d'un cycle de déviation donné ;
une seconde capacité de retour de spot (C2) couplée audit circuit résonnant de retour de spot pour générer, dans ladite seconde capacité de retour de spot, une seconde tension d'impulsion de retour ;
la source (SMPS) d'une tension d'alimentation d'entrée ;
un circuit de charge (556) ;
une inductance d'alimentation (T1) couplée à ladite source de tension d'alimentation d'entrée et audit premier moyen de commutation en vue du couplage desdites première et seconde tensions d'impulsion de retour dans lesdits moyens, jusqu'audit circuit de charge, et en vue de la récupération des pertes d'énergie dans ledit circuit résonnant de retour de spot pendant ledit intervalle de retour de spot ; et
la source d'un second signal d'entrée de modulation (V3) ;
**caractérisé par**
un second moyen de commutation (Q2), réagissant audit second signal d'entrée (V3), utilisé uniquement pendant ledit interval de retour, et couplé à ladite seconde capacité de retour de spot (C2), pour faire varier, conformément audit second signal d'entrée (V3), une différence temporelle entre l'amorçage de ladite seconde tension d'impulsion de retour de spot (V2) pendant ledit intervale de retour, et l'amorçage de ladite première tension d'impulsion de retour de spot (V1) afin de générer la modulation de ladite intensité de déviation (i2) de manière à ce que lorsque ladite seconde tension d'impulsion de retour de spot (V2) est générée, une configuration d'impédance (C2) s'interpose dans le trajet de courant de ladite inductance d'alimentation (W1) et ledit circuit résonnant de retour de spot (100), ladite configuration d'impédance intégrant ladite seconde capacité de retour de spot (C2) et présentant une impédance élevée à des fréquences largement inférieures à la fréquence de résonnance de retour de spot dudit circuit résonnant de retour de spot (100) en vue de l'isolation de ladite inductance d'alimentation (W1) par rapport audit circuit résonnant de retour de spot (100), auxdites fréquences inférieures.

2. Appareil conforme à la Revendication 1, caractérisé en ce que ledit second moyen de commutation (Q2) fait varier la largeur d'impulsion de ladite seconde tension d'impulsion de retour de spot (V2) conformément audit second signal d'entrée (V3) de sorte que la différence de phase entre les parties prédéfinies correspondantes desdites première (V1) et seconde (V2) tensions d'impulsion de retour de spot demeure largement constante lorsque ladite largeur d'impulsion de ladite seconde tension d'impulsion de retour de spot (V2) varie afin de maintenir une troisième tension d'impulsion de retour de spot (Hr), générée dans ladite inductance d'alimentation (W1), en synchronisation avec ladite intensité de déviation (i2) lorsque ladite largeur d'impulsion de ladite seconde tension d'impulion de retour (V2) varie.

3. Appareil conforme à la Revendication 1, caractérisé en ce que ledit second moyen de commutation (Q2) fonctionne dans un état conducteur pendant une première partie de ladite première tension d'impulsion de retour de spot (V1) afin d'appliquer une basse impédance aux bornes de ladite seconde capacité de retour de spot (C2), qui retarde la génération de ladite seconde tension d'impulsion de retour de spot (V2) et en ce que ledit second moyen de commutation (Q2) fonctionne dans un état non conducteur afin de supprimer ladite basse impédance pour permettre la génération de ladite seconde tension d'impulsion de retour de spot (V2) pendant une seconde partie de ladite première tension d'impulsion de retour de spot (V1).

4. Appareil conforme à la Revendication 3, caractérisé en ce que ledit second moyen de commutation (Q2) est conducteur jusqu'à ce que ladite première partie de ladite première tension d'impulsion de retour de spot (V1) dont la longueur varie en fonction dudit second signal d'entrée (V3), ait expiré pour donner une basse impédance entre une paire de bornes de ladite seconde capacité de retour de spot (C2) pendant ladite première partie afin d'empêcher la génération de ladite seconde tension d'impulsion de retour de spot (V2), conformément audit second signal d'entrée (V3), tant que ledit second moyen de commutation (Q2) est conducteur, et en ce que
ledit second moyen de commutation (Q2) n'est pas conducteur après ladite première partie afin de permettre la génération de ladite seconde tension d'impulsion de retour de spot (V2).

5. Appareil conforme à la Revendication 1, caractérisé en ce que ladite inductance d'alimentation (W1) intègre l'enroulement d'un transformateur de retour (T1) d'une part aux bornes de ladite seconde capacité de retour de spot (C2) jusqu'audit circuit résonnant de retour de spot (100) lorsque ledit second moyen de commutation (Q2) n'est pas conducteur, et d'autre part aux bornes du second moyen de commutation (Q2) à la masse lorsque ledit second moyen de commutation (Q2) est conducteur pour former un circuit résonnant de retour de spot combiné, présentant une fréquence de résonnance qui demeure presque inchangée, indifféremment de l'état conducteur ou non conducteur dudit second moyen de commutation (Q2).

6. Appareil conforme à la Revendication 1, caractérisé en ce que
ledit second moyen de commutation (Q2) établit un trajet de courant avec ledit premier moyen de commutation (Q1) pendant une partie dudit cycle donné de déviation et en parallèle avec ladite seconde capacité de retour de spot (C2), et en ce que ladite seconde capacité de retour de spot (C2) est couplée à une première borne de jonction (50) entre ledit premier (Q1) et ledit second (Q2) moyen de commutation et en série avec ladite première capacité de retour de spot (C1).

7. Appareil conforme à la Revendication 1 caractérisé par une capacité de retour de spot (CS) couplée audit enroulement de déviation (gauche) pour former un premier circuit résonnant de retour de spot pendant l'intervalle de retour de spot dudit cycle de déviation et un second circuit résonnant de retour de spot (60) couplé à ladite capacité de retour de spot (CS) pour assurer la correction interne de la distorsion en coussin, ladite seconde tension d'impulsion de retour de spot (C2), générée dans ladite seconde capacité de retour de spot (V2) lorsque ledit second moyen de commutation (Q2) n'est pas conducteur, générant une intensité de modulation pour la correction interne de la distorsion en coussin dans ledit second circuit résonnant de retour de spot (60) modulé conformément à ladite seconde tension d'impulsion de retour de spot (V2).

8. Appareil conforme à la Revendication 1 caractérisé par le moyen couplé audit circuit résonnant de retour de spot (100) afin de générer, pendant un intervalle de retour de spot horizontal, une impulsion de forme essentiellement carrée (V5) présentant une partie supérieure de forme exponentielle, ladite impulsion carrée étant couplée à une première borne d'entrée (base de Q4) d'un amplificateur différentiel (Q3, Q4) d'un circuit de commande pour la correction de trame est-ouest (300), une seconde borne d'entrée (base de Q3) dudit amplificateur réagissant à un signal de vitesse verticale (V6), afin de générer, sur une borne de sortie (collecteur de Q3) dudit amplificateur différentiel, un signal de modulation couplé à une borne de commande (base) dudit second moyen de commutation (Q2) présentant une phase qui varie en fonction dudit signal de vitesse verticale (V6), ladite partie supérieure de ladite tension de l'impulsion carrée (V5) variant de manière à améliorer la linéarité dudit circuit de commande de correction de trame est-ouest (300) par rapport aux variations dudit signal de vitesse verticale (V6).

9. Appareil de déviation avec correction de distorsion de trame, intégrant :
la source d'un premier signal d'entrée (101a) à une fréquence liée à une fréquence de déviation horizontale ;
un circuit résonnant de retour de spot intégrant un enroulement de déviation (gauche) et une première capacité de retour de spot (C1) ;
un premier commutateur à transistor (Q1) réagissant audit premier signal d'entrée et couplé audit circuit résonnant de retour de spot afin de générer une intensité de déviation horizontale dans ledit enroulement de déviation, et une première tension d'impulsion de retour de spot dans ladite première capacité de retour de spot ;
une seconde capacité de retour de spot (C2) couplée en série avec ledit circuit résonnant de retour de spot afin de générer, dans ladite seconde capacité de retour de spot, une seconde tension d'impulsion de retour de spot ;
la source d'un second signal d'entrée (VP), à une fréquence liée à une fréquence de déviation verticale ;
un moyen (101) réagissant auxdits premier et second signaux d'entrée afin de générer un signal de commande (10 la) à une fréquence horizontale présentant une phase qui varie en fonction de ladite fréquence de déviation verticale ;
**caractérisé par**
un second commutateur (Q2) utilisé uniquement pendant l'intervalle de retour de spot et couplé audit premier commutateur à transistor (Q1) de manière à ce que, pendant une partie d'un cycle donné de ladite intensité de déviation (i2) qui survient lors d'un intervalle de retour de spot, ledit premier commutateur à transistor (Q1) et ledit second commutateur (Q2) établissent un trajet de courant, ledit second commutateur (Q2) réagissant audit second signal de commande (V3), et couplé à ladite seconde capacité de retour de spot (C2) pour générer une variation temporelle lorsque ladite seconde tension d'impulsion de retour de spot (V2) est appliquée lors du retour de spot dudit circuit résonnant de retour de spot par rapport au moment de l'amorçage de ladite première tension d'impulsion de retour de spot (V1), tout en garantissant une différence de phase assez constante entre les deux tensions d'impulsion de retour de spot.

10. Appareil conforme à la Revendication 9, caractérisé en ce que le point central entre ledit moment où ladite seconde tension d'impulsion de retour de spot (V2) est amorçée et le moment où ladite seconde tension d'impulsion de retour de spot (V2) est coupée, demeure essentiellement en phase avec ladite première tension d'impulsion de retour de spot (V1).
